Europäisches Patentamt

European Patent Office

Office européen des brevets

(11) Veröffentlichungsnummer: **0 362 781**
**A2**

## (12) EUROPÄISCHE PATENTANMELDUNG

(21) Anmeldenummer: 89118273.5

(22) Anmeldetag: 03.10.89

(51) Int. Cl.⁵: **B23Q 1/08 , B23Q 1/26**

(30) Priorität: 07.10.88 DE 3834140
29.04.89 DE 3914363

(43) Veröffentlichungstag der Anmeldung:
**11.04.90 Patentblatt 90/15**

(84) Benannte Vertragsstaaten:
**AT CH DE FR GB LI**

(71) Anmelder: **MCA MICRO CRYSTAL AG**
**Mühlibachstr. 2**
**CH-9450 Altstätten(CH)**

(72) Erfinder: **Maier, Andreas**
**Stegwiesen 2**
**D-7959 Schwendi-Hörenhausen(DE)**

(74) Vertreter: **Hutzelmann, Gerhard**
**Duracher Strasse 22**
**D-8960 Kempten(DE)**

(54) **Hochfrequenzspindel zur Werkstückbearbeitung.**

(57) Hochfrequenzspindel zur Werkstückbearbeitung, mit einer mittels wenigstens eines Luftlagers(26 bis 28) in einem Spindelgehäuse(3) drehbar gelagerten, radial und axial abgestützten Arbeitsspindel(1), der ein gesonderter Stellantrieb(39) zur Längsverstellung gegenüber dem Spindelgehäuse(3) zugeordnet ist, sowie einer Ausgestaltung des Luftlagers mit Sintermaterial.

Fig 1

## Hochfrequenzspindel zur Werkstückbearbeitung

Die Erfindung betrifft eine Hochfrequenzspindel zur Werkstückbearbeitung, mit einer mittels wenigstens eines Luftlagers in einem Spindelgehäuse drehbar gelagerten, radial und axial abgestützten Arbeitsspindel.

Hochfrequenzspindeln dieser Art sind ansich bekannt; sie werden für Drehzahlen bis über 60.000/min ausgelegt und sollen eine schnelle und präzise Bearbeitung von Werkstücken unter Einsatz möglichst geringer bewegter Massen ermöglichen.

Die eingesetzten hohen Drehzahlen sind notwendig, um die Schneidleistungen der Schneidstoffe wie Hartmetall, vor allem aber Keramik und polykristalline Diamanten auszunutzen. Neben hohen Bearbeitungsgeschwindigkeiten ist auch eine verhältnismäßig große Vorschubgeschwindigkeit erforderlich.

Trotz der relativ geringen einzusetzenden Massen sind wegen der Kürze der jeweils verfügbaren Arbeitstaktzeiten, wie sie bei neueren Bearbeitungsstationen eingehalten werden müssen, große Beschleunigungs und Bremskräfte aufzubringen, wenn diese Bewegung exakt an der vorgegebenen Stelle beendet werden soll, ohne die resultierende Bearbeitungsgeschwindigkeit herabzusetzen.

Zum Einsatz in Werkzeugmaschinen- und Bearbeitungszentren sind zwar Hochfrequenzspindeln bekannt, welche eine axiale Zustellung nach vorgebebenem Programm ermöglichen. Die bei der neuen Hochgeschwindigkeitsbearbeitung erforderliche Schnellverstellung unter gleichbleibend hoher Einstellpräzision läßt sich mit diesen Geräten jedoch nicht erreichen. Dies ist wenigstens zum Teil dadurch bedingt, daß hier die ganze Spindeleinheit verstellt wird.

Der Erfindung liegt die Aufgabe zugrunde, eine Spindel dar eingangs genannten Art so weiterzubilden, daß in kürzester Zeit exakter zugestellt werden kann.

Diese Aufgabe wird erfindungsgemäß dadurch gelöst, daß der Arbeitsspindel ein gesonderter Stellantrieb zur Längsverstellung gegenüber dem Spindelgehäuse zugeordnet ist.

Auf diese Weise werden die bewegten Massen wesentlich herabgemindert und sind weitgehend durch die unmittelbar zur Arbeitsspindel bzw. zum Rotor gehörenden Teile begrenzt, während der Stator und das die Gerätestarrheit bestimmende Gehäuse ortsfest bleiben. Daher sind bei vorgegebenen Beschleunigungszeiten die Beschleunigungskräfte wesentlich geringer als bei einer Bewegung der ganzen Spindeleinheit. Es ist sogar möglich zusätzlich die Stellzeiten zu verkürzen.

Darüber hinaus erleichtert die vorgegebene Funktionstrennung in Arbeitsspindel, Stator und Gehäuse eine modulare Aufteilung des ganzen Gerätes in einzelne Baugruppen, die sich leicht zusammenfügen und wieder auseinandernehmen lassen, was Überprüfungsvorgänge, Wartung und Reparaturen vereinfacht.

Gemäß einer vorteilhaften Ausgestaltung der Erfindung ist vorgesehen, daß der Stellantrieb zu seinem einen Ende hin in einem Radiallager und zum entgegengesetzten Ende hin im Stellgewinde einer Stellspindel gelagert ist.

Auf diese Weise läßt sich die notwendige Vorrichtung zum axialen Verstellen der Arbeitsspindel zu Lagerzwecken heranziehen, was wiederum die zu beschleunigenden Massen verringert und eine verbesserte Ausnutzung der Einstellfähigkeit ermöglicht.

Sehr vorteilhaft ist es auch, wenn gemäß der Erfindung die zweite Lagerung des Stellgetriebes durch ein Spindelgetriebe mit einer Gewindemutter gebildet ist, die sich auf der Stellspindel abstützt.

Dabei ist zweckmäßiger Weise das Stellgetriebe mit einer Kugelumlaufmutter versehen.

Als ebenfalls sehr vorteilhaft hat es sich erwiesen, wenn erfindungsgemäß das Radiallager durch ein Rollenlager gebildet ist.

Durch diese beiden Maßnahmen wird bei weiter verbesserter Präzision der Leistungsverlust weiter gesenkt.

Eine weitere vorteilhafte Ausgestaltung der Erfindung liegt darin, daß die Welle des Stellgetriebes durch die Welle des Stellspindel-Motors gebildet ist.

Bei einer erfindungsgemäßen Hochfrequenzspindel mit einem Axial-Luftlager ist es vorteilhaft, wenn die Druckluftzuführung zum Axiallager in der Stellspindel verlegt ist.

Ebenfalls sehr günstig ist es, wenn erfindungsgemäß das gasförmige Trägermedium wenigstens eines Lagers durch eine Gleitring Dichtungsanordnung zugeführt ist.

Eine weitere erfindungsgemäße Ausgestaltung liegt darin, daß der Sekundärteil wenigstens eines Antriebsmotors in die Oberfläche der Arbeitsspindel so integriert ist, daß diese eine durchgehend glattflächige Begrenzungsfläche erhält.

Verhältnismäßig einfach und zuverlässig wird die erfindungsgemäße Spindel dadurch, daß am Gehäuse bzw. am Stator eine in der Spindelachse gegen eine Spannzange vorragende Auswerferstange befestigt ist, die zum Öffnen der Spannzange durch Einfahren der Arbeitsspindel in eine Rückzugsstellung dient.

Als sehr vorteilhaft hat sich auch ergeben, wenn erfindungsgemäß ein Puffer vorgesehen ist, der die Bewegungsbahn der Arbeitsspindel im Gehäuse begrenzt.

Eine weitere vorteilhafte Ausgestaltung liegt erfindungsgemäß darin, daß die Spannzange mit einem Fliehkraftmechanismus zu ihrem Steuern versehen ist.

Sobald eine Ladevorrichtung eingesetzt wird, die das verschlissene Werkzeug bei der Entnahme festhält, ist eine Auswerfereinrichtung notwendig; die erfindungsgemäße Ausgestaltung vereinfacht dies aber ganz wesentlich.

Dabei ist es dann besonders vorteilhaft, wenn Fliehgewichte vorgesehen sind, die radial und axial einstellbar und zwischen einer Federeinrichtung und wenigstens einer Schrägfläche geführt sind und zum axialen und radialen Verspannen des Werkzeuges in der Spannzange dienen.

Bei einer zu ihrem hinteren Ende in einzelne Federungen längsgeschlitzten hülsenförmigen Spannzange ist es vorteilhaft, wenn die Fliehgewichte fest an den Enden der Federzungen angebracht sind.

Eine weitere vorteilhafte Ausgestaltung der Erfindung liegt auch darin, daß der Fliehkraftmechanismus innerhalb eines Hohlraumes der Arbeitsspindel angebracht ist, in dem ein Stützring mit kegelartigen Anlageflächen zur axialen Abstützung der Fliehgewichte angebracht ist, die sich mit torusartig gerundeten Stirnflächen an Tellerfedern abstützen.

Als ebenfalls sehr günstig hat es sich erwiesen, wenn erfindungsgemäß der Fliehkraftmechanismus zur Betätigung der Spannzange von deren Greifteil abgetrennt und mit diesem lösbar verbunden ist.

Bei einer Spindel zur Werkstückbearbeitung mit einer in einem Spindelgehäuse mittels wenigstens eines Luftlagers radial und axial abgestützten Arbeitsspindel ist es erfindungsgemäß besonders günstig, wenn ein Axialschubmotor etwa in Längsmitte des Spindelgehäuses ebenso wie der Drehmotor zwischen seitlichen Radiallagern angeordnet ist.

Sehr vorteilhaft ist es auch, wenn erfindungsgemäß eine berührungslos arbeitende Meßeinrichtung vorgesehen ist, welche zum ständigen Bestimmen des augenblicklichen Ortes der Arbeitsspindel längs der Spindelachse dient.

Dazu ist es günstig, wenn im Spindelgehäuse zu den beiden Enden eines Meßraumes hin zwei Sensorspitzen in der Axialbahn eines Teiles der Arbeitsspindel angebracht und an eine Meßeinrichtung sowie eine Steuereinrichtung zur Steuerung der Längsverstellung der Arbeitsspindel angeschlossen sind.

Ebenfalls sehr vorteilhaft ist es, wenn die Meßeinrichtung einen Optokoppler aufweist und die Sensorspitzen mit je einem Sender - wie z.B. eine Leuchtdiode - und einem Empfänger - wie z.B.

eine Empfangsdiode - versehen sind.

Eine weitere erfindungsgemäße Ausgestaltung liegt darin, daß ein zur Messung und Steuerung von Drehgeschwindigkeit und/oder Längsvorschub der Arbeitsspindel dienender Taststrahl des Optokopplers längs der Spindelachse durch wenigstens eine exzentrisch zu dieser angebrachte Durchbrechung in einem Flansch der Arbeitsspindel hindurchgerichtet ist.

Für die Dauerfunktion der erfindungsgemäßen Spindel ist es sehr günstig, wenn im Einleitweg des Trägermediums ein auswechselbarer Luftfilter angeordnet ist.

Dabei hat es sich als vorteilhaft ergeben, wenn dem Filter ein Differenzdruckmesser mit je einem in der Strömungsbahn des Trägermediums vor und hinter dem Filter angebrachten Drucksensor zugeordnet ist.

Eine besonders günstige Ausgestaltung liegt erfindungsgemäß darin, daß als Luftlager eine Lagerbuchse vorgesehen ist, mit mindestens einem Buchsenteil, das Sinterwerkstoffe unterschiedlicher Korngröße und/oder Kornstruktur aufweist.

Bisher hat man für derartige Einsatzzwecke verhältnismäßig feinkörniges Sintermaterial verwendet, um auf der ganzen Umfangsfläche Druckgas zuführen zu können. Die Gasströmung wird dadurch zwar verhältnismäßig gleichmäßig, aber auch stark gedrosselt, wodurch die Kühlung eingeschränkt wird. Darüber hinaus entsteht eine große Verstopfungsgefahr für die feinen Strömungswege. Durch die erfindungsgemäße Lösung ist diese Gefahr beseitigt, wobei bei Bedarf die Luftzuführung im Bereich der ganzen Buchsenwandung erfolgen kann. Es ist sogar möglich, im überwiegenden Teil einen völlig gasundurchlässigen Buchsenwerkstoff einzusetzen, sofern in einzelnen Bereichen das Sintermaterial so grobkörnig gehalten ist, daß sich Strömungswege größeren Querschnittes ergeben, die eine stärkere und konzentrierte Gaszufuhr gewährleisten und dadurch einer Verstopfung jedes einzelnen Strömungsweges entgegenwirken.

Gemäß einer weiteren vorteilhaften Ausgestaltung der Erfindung ist vorgesehen, daß die in wenigstens einem Buchsenteil vorgesehenen Sinterwerkstoffe unterschiedlicher Korngröße und/oder Kornstruktur in unregelmäßiger Verteilung bzw. Mischung vorgesehen sind.

Dabei ist die Durchströmbarkeit des Buchsenwerkstoffes umso besser, je größer der Anteil des grobkörnigen Sintermaterials ist, das sich mit dem feinkörnigen Sintermaterial zu einer körnigen Struktur wechselnder Gleichförmigkeit und Dichte mit unterschiedlicher Hohlraumgestaltung verbindet. Dieses Gebilde ist hinreichend starr, um Verformungen im Auflagebereich des Lagers zu verhindern, damit das Trägermedium ohne Störungsgefahr in ausreichender Menge zugeführt werden kann.

Eine vorteilhafte weitere Ausgestaltung der Erfindung hat zum Inhalt, daß grobkörniges Sintermaterial in feinkörnigem Sintermaterial derart eingelagert ist, daß es durch die Buchsenwandung hindurch zusammenhängend verlaufende Strömungswege größeren Querschnitts für das Trägermedium des Spindellagers bildet.

Auch Engstellen solcher Strömungswege haben dabei den mehrfachen Querschnitt des eingesetzten, relativ groben Sinterkorns.

Sehr vorteilhaft ist es auch, wenn erfindungsgemäß die durch grobkörniges Sintermaterial gebildeten Strömungswege entsprechend einem vorgegebenen Muster über die Buchsenwandung verteilt angebracht sind.

Diese Strömungswege lassen sich in Umfangsrichtung und/oder axialer Richtung unter etwa gleichen Zwischenabständen anordnen.

Dadurch wird die Vergleichmäßigung der Versorgung mit dem Trägermedium erheblich gesteigert.

Nach einer weiteren Ausgestaltung der Erfindung ist das die Strömungswege bildende grobkörnige Sintermaterial in unter axialen Zwischenabständen vorgesehenen Bereichen stärker konzentriert als in den anderen Bereichen des Buchsenkörpers.

Auf diese Weise werden unter Zwischenabständen praktisch Ringdüsen gebildet, die der Zufuhr des Trägermediums dienen, während die Zwischenbereiche die Tragfunktion übernehmen und die Aussteifung der Lagerbuchse bewirken.

Erfindungsgemäß kann die Lagerbuchse eine Mehrzahl axial aneinander anschließende Ringbereiche aufweisen, die unterschiedliche Anteile von grobkörnigem und feinkörnigem Sintermaterial beinhalten.

Dabei können sich Ringbereiche aus vorwiegend grobkörnigem Sintermaterial mit solchen aus weniger grobkörnigem Werkstoff abwechseln.

Als besonders vorteilhaft hat es sich dabei herausgestellt, wenn erfindungsgemäß die Ringbereiche aus vorwiegend grobkörnigem Werkstoff jeweils wenigstens einen vorgefertigten Sinterkörper enthalten, der mit anderen Teilen der Lagerbuchse einstückig zusammengesintert ist.

Dadurch ist es möglich, daß die Lagerbuchse in wenigstens einer Querebene unter gleicher Winkelteilung sternförmig angeordnete und speichenartig eingesinterte Düsenkörper aus grobkörnigem Sintermaterial aufweist.

Durch solche Düsenkörper läßt sich die gesamte Druckgasversorgung bewerkstelligen, wobei sich durch die separate Herstellung ihre Eigenschaften und insbesondere die dort ausgebildeten Druckgaswege besser einstellen lassen als bei unkontrollierter Mischung von porösem Material unterschiedlicher Eigenschaften.

Erfindungsgemäß ist wenigstens ein Querschnittsbereich der Lagerbuchse durch eine zwischen seitlichen Buchsenteilen anderen Werkstoffes eingesinterte Scheibe aus überwiegend grobkörnigem Sinterwerkstoff gebildet.

Die Verbindung kann dabei ausschließlich in Radialebenen, aber auch über spezielle Vorsprünge erfolgen, die in die Nachbarbereiche eingreifen.

Wenigstens die eingelagerten oder zwischengefügten grobkörnigen Sinterscheiben lassen sich erfindungsgemäß auf ihrer Innenseite mit in Umfangsrichtung gleichmäßig verteilten, im Querschnitt sektorförmigen Ausnehmungen versehen, die eine Verzahnungsfunktion übernehmen können. Ihre Bedeutung liegt aber im wesentlichen darin, daß sie einzelne sektorförmige Vorsprünge voneinander trennen, welche die eigentlichen tragenden Flächen bilden und sich besser kühlen lassen als geschlossene Ringflächen.

Erfindungsgemäß kann auch vorgesehen sein, daß die Lagerbuchse vorwiegend Kornmaterial großer Temperaturbeständigkeit wie z.B. Wolframcarbid aufweist.

Vorteilhaft ist es auch, wenn darüber hinaus erfindungsgemäß die Lagerbuchse einen Tragkörper aus hochfestem und wärmebeständigem Werkstoff wie Metall aufweist, an dem ein oder mehrere Sinterkörper durch Verschmelzen bzw. Anlöten befestigt sind.

In der Zeichnung ist die Erfindung anhand mehrerer Ausführungsbeispiele veranschaulicht. Dabei zeigen:

Fig.1 einen Längsschnitt durch eine erfindungsgemäße Hochfreguenzspindel bei eingefahrener Arbeitsspindel,

Fig.2 den entsprechenden Längsschnitt bei ausgefahrener Arbeitsspindel,

Fig.3 eine vergrößerte Darstellung des Mittelteils der Spindel aus Figur 1 in Einfahrstellung,

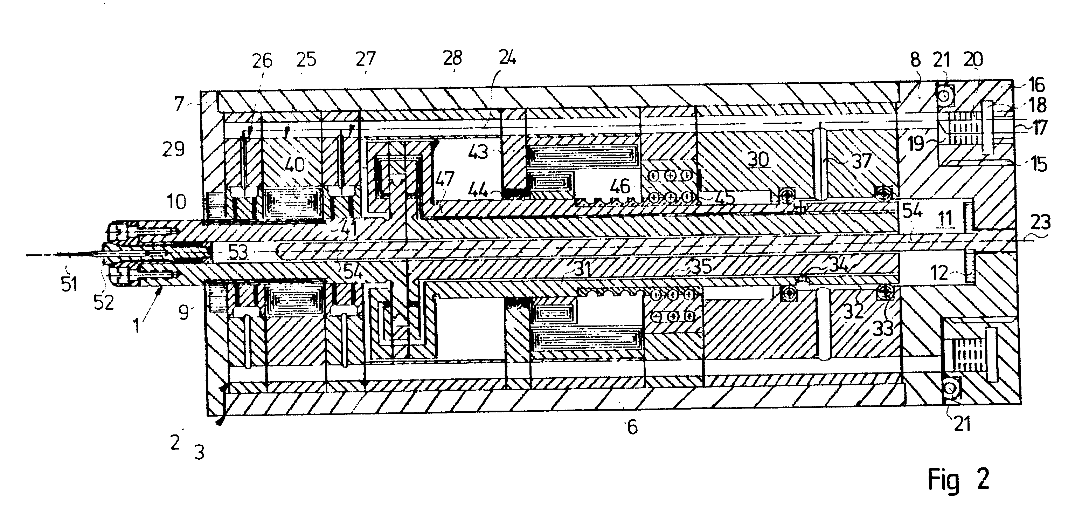

Fig .4 die entsprechende Ausfahrstellung des Mittelteils in der Bezugsstellung Fig. 2,

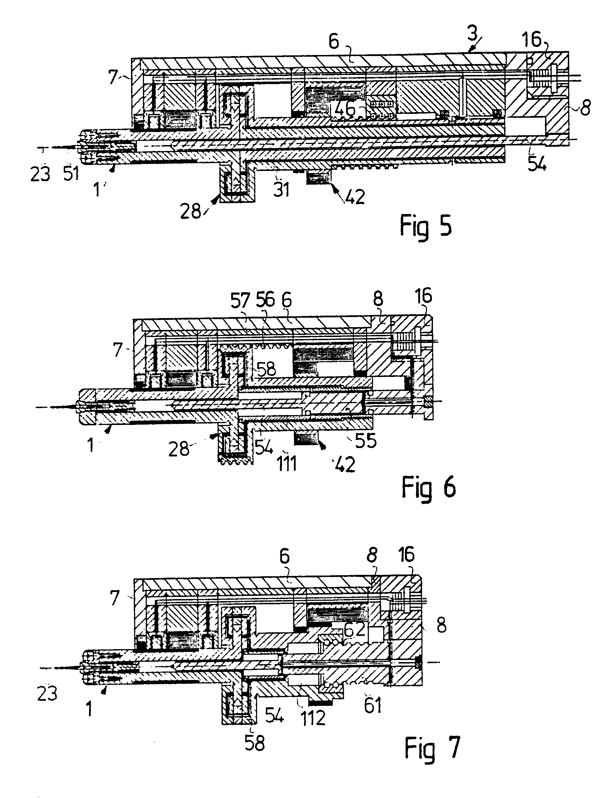

Fig.5 bis 9 eine Vergleichsdarstellung abgewandelter Ausführungen der Erfindung jeweils Längsschnitte in Halbschnitt-Darstellung,

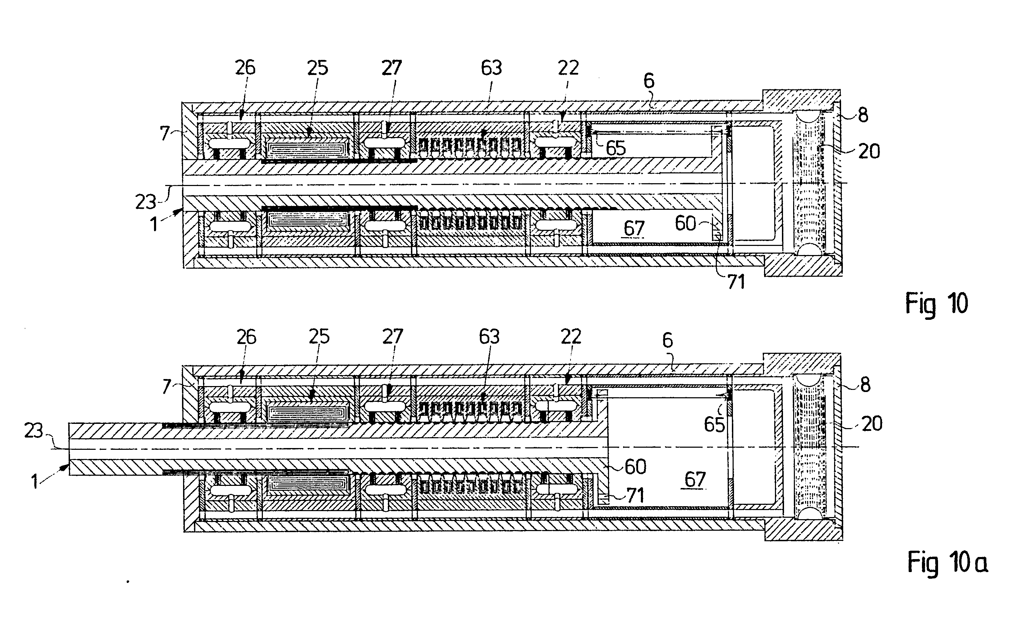

Fig. 10 einen Längsschnitt durch eine weitere Ausführungsform der Erfindung mit drei Luftlagern in der Einfahrstellung,

Fig.10a die gleiche Darstellung in der Ausfahrstellung,

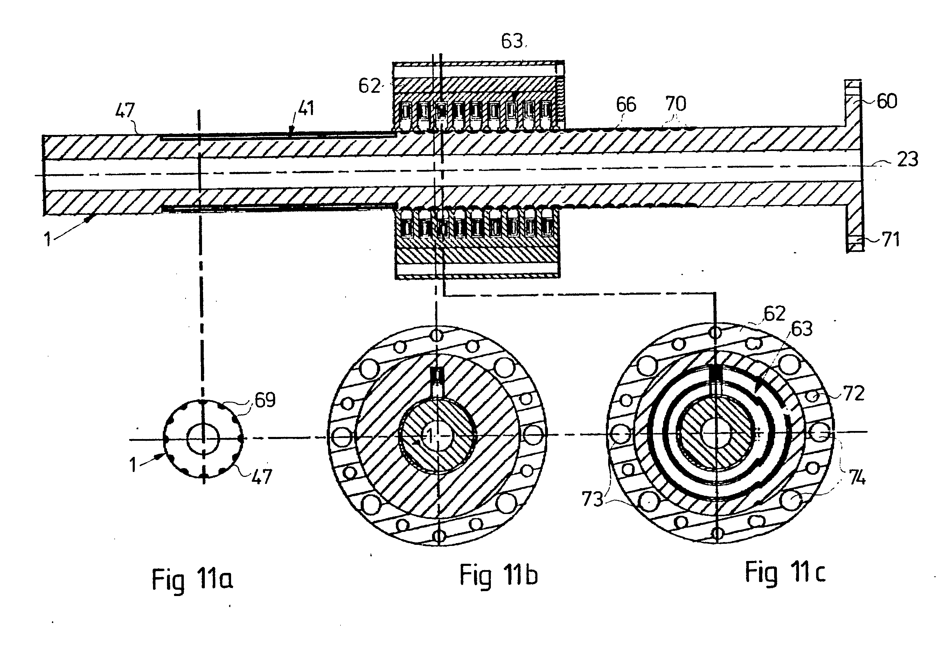

Fig.11 einen Längsschnitt durch die zugehörige Arbeitsspindel und einen Linearmotor als Vorschubantrieb,

Fig.11a bis 11c Querschnitte durch die Ausführung nach Fig.11, entlang der eingezeichneten Schnittlinien,

Fig.12 einen Längsschnitt durch eine in eine Arbeitsspindel eingebaute Spannzange ohne Auswerfer,

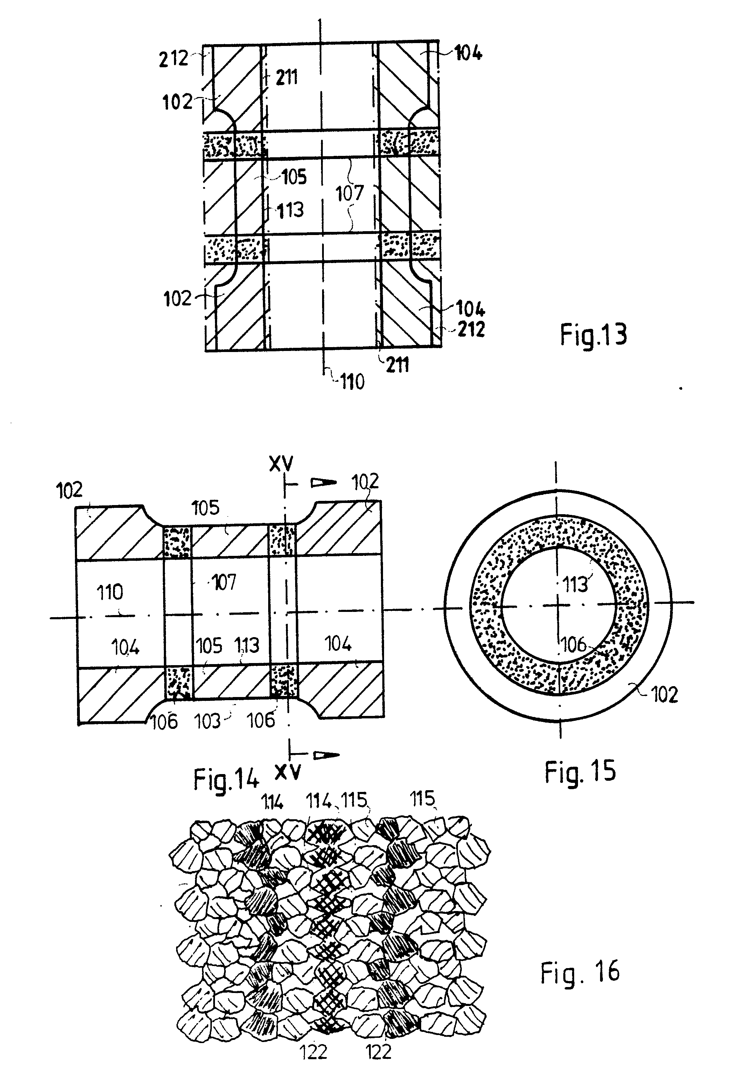

Fig.13 einen Längsschnitt einer Lagerbuchse mit Schleifübermaß,

Fig.14 einen Längsschnitt der fertiggestellten Lagerbuchse,

Fig.15 einen Schnitt nach Linie XV-XV in Fig. 14,

Fig.16 einen vielfach vergrößerten Schnitt durch eine Mischlage von grobkörnigem und feinkörnigem Sintermaterial,

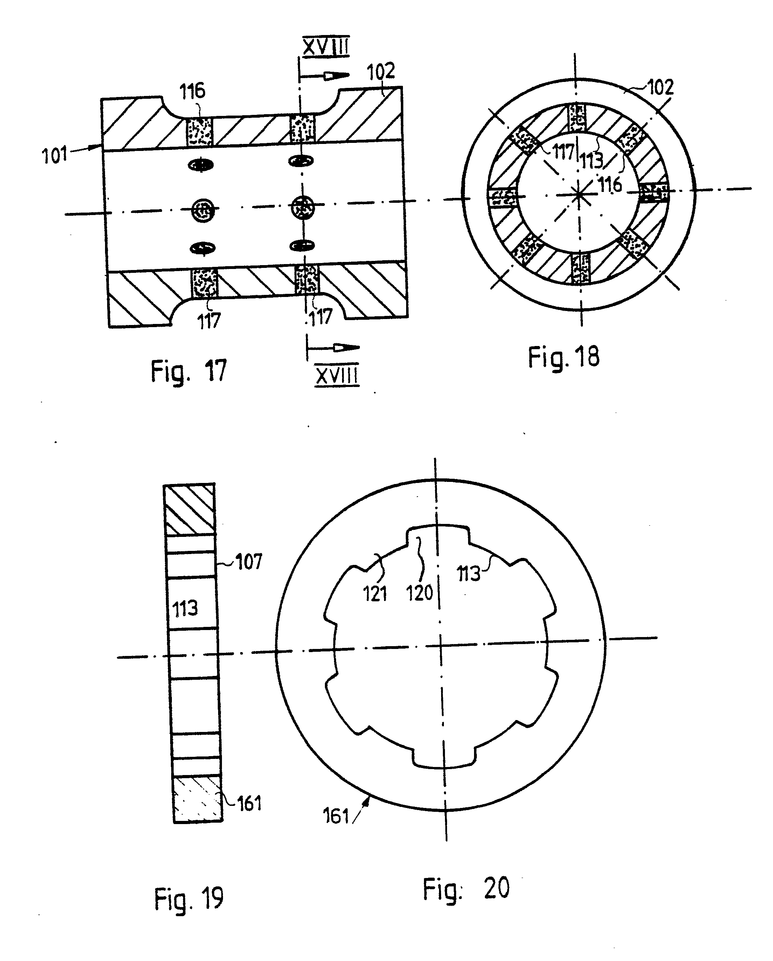

Fig.17 eine Abwandlung der in Fig.14 gezeigten Lagerbuchse,

Fig.18 einen Querschnitt nach Linie XVIII-XVIII in Fig.17,

Fig.19 einen Längsschnitt durch eine einzelne zwischenzufügende gesinterte Ringscheibe aus grobkörnigem Sintermaterial und

Fig. 20 eine Stirnansicht dieser Ringscheibe.

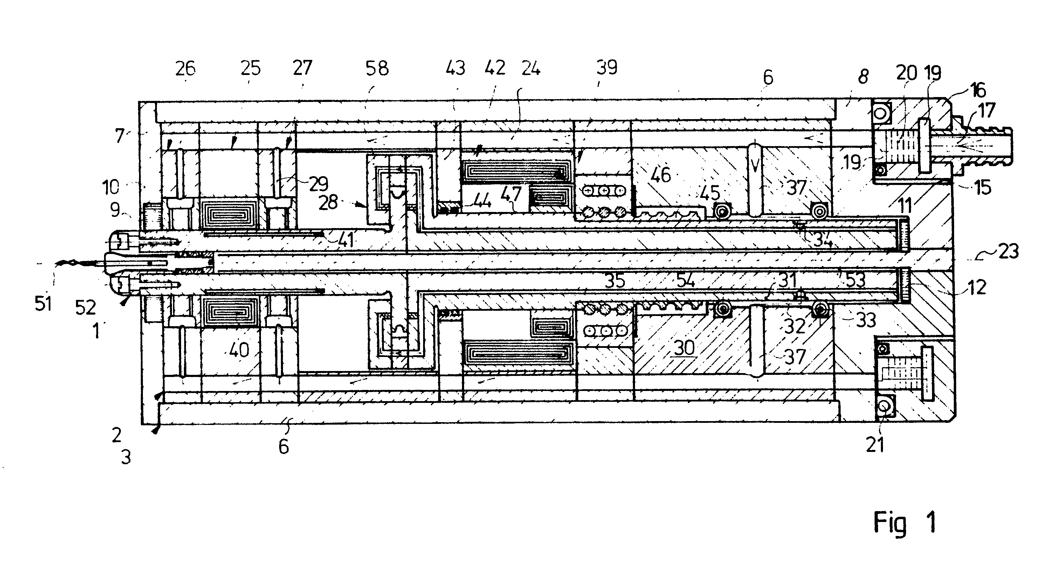

Die in den Figuren 1 und 2 gezeigte Hochfrequenzspindel weist als Rotor eine langgestreckte quergeteilte Arbeitsspindel 1 auf, die in einem durch Querunterteilung modular aufgeteilten Spindelstator 2 mittels Luftlagern 26 bis 28 drehbar gelagert und axial und radial ausgerichtet und von einem zylindrischen Gehäuse 3 umschlossen ist.

Das Gehäuse 3 gliedert sich in ein zylindrisches Hüllrohr 6, das an beiden Enden durch Gehäusedeckel 7,8 abgeschlossen ist. Dabei hat der vordere Deckel 7 zum Durchtritt des vorderen Spindelendes eine zentrische Durchbrechung 9 mit einer dynamischen Ringdichtung 10, während im hinteren Deckel 8 innenseitig ein zentrischer Aufnahmeraum 11 für das Hinterende der Arbeitsspindel 1 in der Einfahrstellung gemäß Fig.1 eingeformt ist.

In das Hinterende des Deckels 8 ist außen eine Winkelnut 15 eingeformt, in der ein Anschlußring 16 sitzt, an dessen Anschlußöffnung 17 zwischen zwei Ringräumen 18,19 ein auswechselbarer Ringfilter 20 zum Ausscheiden von festen und auch flüssigen Materialteilchen aus der Lagerluft gehalten ist. Dem Filter 20 sind nicht gezeigte Drucksensoren vor- und nachgeschaltet, deren Differenzdruck den Verschmutzungsgrad anzeigt. Gegenüber dem Deckel 8 ist der Anschlußring 16 durch zwei Ringdichtungen 21 abgedichtet.

Die dort zugeführte Druckluft oder ein anderes gasförmiges Druckmedium wird durch dicht innerhalb des Hüllrohres 6 parallel zur Spindelachse 23 durch die einzelnen Statorteile hindurchgeführte Längsbohrungen 24 den einzelnen Verbrauchsstellen zugeführt.

Das sind einmal die beiderseits der vorderen Motoreinheit 25 vorgesehenen Radiallager 26,27 und das Axiallager 28. Während die Radialbohrungen 29 in den Moduleinheiten der Radiallager 26,27 unmittelbar in die Längsbohrungen 24 münden, gelangt das Druckgas für das Axiallager 28 zunächst über eine Radialbohrung 37 im Luftverteiler 30 in eine zwischen diesem und einer Rotorhülse 31 gebildete Kammer 32, die seitlich durch Ringdichtungen 33 abgeschlossen ist.

Von dort strömt das Druckmedium über eine Durchbrechung 34 und einen zwischen Rotorhülse 31 und Arbeitsspindel gebildeten Ringspalt 35 zum Axiallager 28.

Während die Außenwicklung 40 der vorderen Motoreinheit 25 zwischen der Innenseite der zugehörigen Statorscheibe und der Außenfläche der Arbeitsspindel 1 angebracht ist, sitzt die zugehörige Innenwicklung 41 in Form eines dünnen Hülsenkörpers in einer ringförmigen Ausnehmung auf der zylindrischen Außenseite der Arbeitsspindel 1 bündig eingelassen, so daß das Drehmoment unmittelbar zwischen beiden Teilen motorisch aufgebracht werden kann.

Zwischen dem Axiallager 28 und der hinteren Motoreinheit 42 mit Stellantrieb 39 ist eine Lagerscheibe 43 eingezogen, die sich innen mittels eines Rollenlagers 44 auf der Außenfläche der Rotorhülse 31 abstützt, die hier die Welle der Motoreinheit und damit des Stellantriebs 39 bildet. Dabei treibt die (hintere) Stellmotoreinheit 25 die Rotorhülse 31 an, die fest eine rohrförmige Stellspindel 45 trägt, in deren Gewinderillen Kugeln einer statorfesten Kugelumlaufmutter 46 eingreifen. Die Arbeitsspindel 1 wird also im Bereich der (hinteren) Stellmotoreinheit 25 und der Stellspindel 45 einmal über eine Zylinderfläche 47 im Doppelrollenlager 44 und zum anderen über einen Gewindeeingriff durch die Kugelumlaufmutter 46 abgestützt. Auf diese Weise kann die ganze Arbeitsspindel unabhängig von ihrer Betriebsdrehzahl ohne Druckabfall mit beliebiger Stellgeschwindigkeit und hoher Präzision mittels eines einfachen Motorantriebs gefahren werden.

Am Vorderende der den Rotor bildenden Arbeitsspindel 1 ist ein Werkzeug 51 in Form eines Spiralbohrers so in einer Spannzange 52 gehalten, daß deren rückseitiges Ende beim Rückbewegen der Arbeitsspindel in die Einfahrstellung gegen das zentrierende Vorderende einer in einer axialen Höhlung 53 vorragenden Auswerferstange 54 stößt, die fest im hinteren Deckel 8 gehalten ist. So kann bei jeder Rückbewegung in die Einfahrstellung das zuvor benutzte Werkzeug ausgeworfen werden.

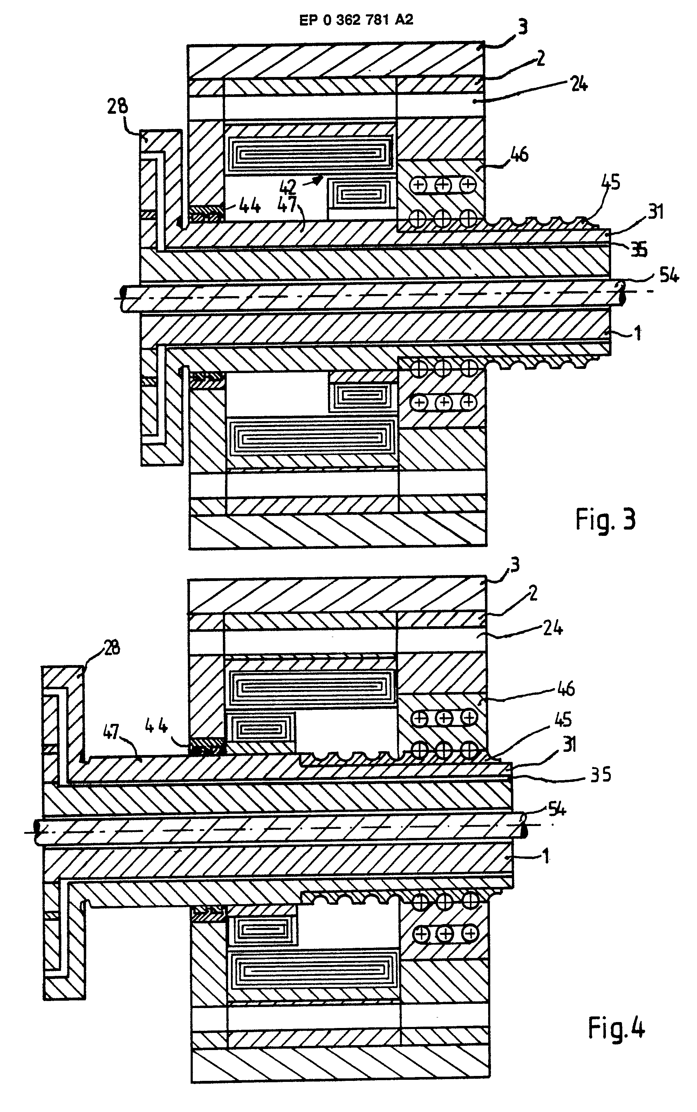

Die Figuren 3 und 4 zeigen gegenüber den Figuren 1 und 2 in vergrößertem Maßstab einen Mittelteil der Spindel, was keine weitergehenden Ausführungen erfordert.

Die Figuren 5 bis 9 zeigen Vergleichsdarstellungen verschiedener Typen, wobei Fig. 5 weitgehend Fig.2 entspricht, während nach Fig.6 die Auswerferstange 54 ein Kolbenende 55 aufweist, das beim Rückfahren der Arbeitsspindel in einen ringförmigen Aufnahmeraum 111 hineinbewegbar ist und das Axial-Stellgewinde 56 zwischen der Innenwandung einer Stator-Sektion 57 und dem Außenteil 58 der Arbeitsspindel im Bereich des Axiallagers 28 angeordnet ist. Dabei ist die Druckluftzufuhr nach innen zur Spindelachse hin in das Kolbenende 55 hineinverlegt. Auf diese Weise läßt sich, wie vor allem ein Vergleich mit Fig.5 zeigt, die Spindellänge wesentlich verkleinern.

Das gilt auch für die Ausführung Fig.7, wo sich an den verdickten Kolbenteil der Auswerferstange 54 ein noch stärker verdickter Gewindeteil 61 mit dem Stellgewinde 62 anschließt, der in den erweiterten ringförmigen Aufnahmeraum 112 vordringen kann.

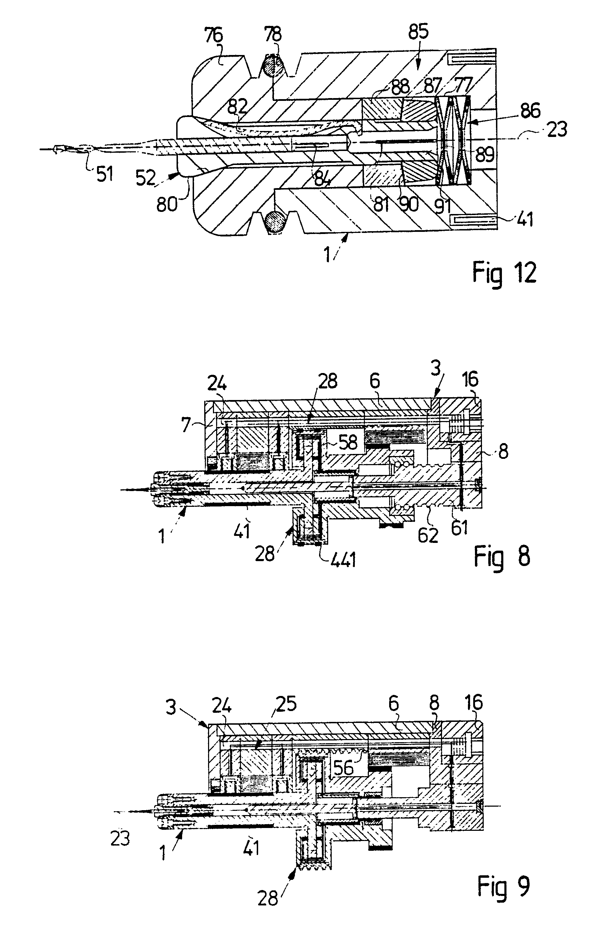

Die letztere Ausbildung ist auch nach Fig.8 verwendet, wobei zusätzlich die Rollenlagerung 441 an den Umfang des Außenteils 58 des Axiallagers gelegt wurde. Dort ist wiederum nach Fig.9 das Stellgewinde 56 in der gleichen Weise angeordnet wie nach Fig.6.

Die Fig.10 und 10a zeigen nun eine Hochfrequenzspindel deren Arbeitsspindel 1 durch drei unter größeren Zwischenabständen vorgesehene Radiallager 26,27,22 getragen ist. Im vorderen Zwischenraum ist dabei die Rotations-Motoreinheit 25 angeordnet, im hinteren ein Linearmotor 63, der eine exakte axiale Einstellung unabhängig von der Drehzahl nach Vorgabe einer Meßeinheit 64 bewirkt. Diese ertastet zwischen ihren Sensorspitzen 65 die Relativanordnung eines Flansches 60 der Arbeitsspindel 1 und ermöglicht dadurch eine zuverlässige Positionssteuerung.

Die Meßeinheit 64 weist hier einen Optokoppler auf, wobei die einander gegenüberliegenden Sensorspitzen 65 jeweils mit einer Leuchtdiode und einer Empfangsdiode versehen sind und der Flansch 60 mit dem gleichen Radialabstand von der Spindelachse 23 wie die Sensorspitzen 65 Axialbohrungen 71 aufweisen. Bei jeder Drehung der Arbeitsspindel wird somit mehrmals eine Sichtverbindung zwischen den beiden Sensorspitzen 65 hergestellt, was in nicht weiter gezeigter Weise ein Zählen dieser Impulse und damit die Ermittlung der Drehgeschwindigkeit und zum anderen ein digitales Fortschalten der Arbeitsspindel 1 durch den Linearmotor 63 ermöglicht.

Auch dabei sind, wie vor allem Fig.11 erkennen läßt, die Innenwicklungen 41,66 beider Motoren 25,42 in die Zylinderfläche 47 der Arbeitsspindel 1 eingelassen, ohne daß die Struktur der Außenfläche wesentlichen Änderungen unterliegt. Bei der Innenwicklung 41 handelt es sich um Längsrillen 69, bei der Innenwicklung 66 um Umfangsrillen 70, die jeweils durch elektrisch hochleitfähiges Material ausgefüllt sind.

Nach Fig. 12 ist ein bundbuchsenförmiger Verschlußstopfen 76 in das Außenende einer in den Korpus der Arbeitsspindel 1 eingeformten Stufenbohrung 77 eingesetzt und mit dem Spindelkorpus durch eine ringförmige Lötnaht 78 fest verbunden.

Die hülsenförmige Spannzange 52 stützt sich mit der Außenfläche ihres kegelförmig verdickten Spannkopfes 79 an der kegelförmigen Innenfläche 80 des Verschlußstopfens 76 ab. An beiden Enden der Spannzange sind Längsschlitze 81,84 eingeformt, die ein kontrolliertes Verformen durch Zusammenpressen und Aufweiten ermöglichen sollen. Zur Fixierung des Werkzeugs und zum radialen Verspannen dienen Blattfedern 82, die in bogenförmig begrenzte Längsnuten 83 der Spannzange 52 eingreifen. Zur Betätigung, insbesondere zum selbsttätigen Schließen der Spannzange 52 dient ein in die Stufenbohrung 77 eingesetzter Fliehkraftmechanismus 85. So stützen sich an der Schulter der Stufenbohrung 77 Tellerfedern 86 ab, die über Fliehgewichte 87 und einen Druckring 88 gegen den Verschlußstopfen 76 drücken und dadurch die Spannzange 52 in der vorderen Endstellung zentrieren. Dabei sind die wegen der größeren Wichte aus Hartmetall gefertigten Fliehgewichte 87 an den freien Enden der zwischen den Längsschlitzen 81 gebildeten, im Querschnitt sektorförmigen Federzungen 89 festgelötet.

Die Anlagefläche 90 zwischen dem Druckring 88 und den Fliehgewichten 87 ist kegelförmig ausgebildet. Zudem sind die an den Tellerfedern 86 anliegenden Stirnflächen 91 der Fliehgewichte 87 torusförmig gerundet.

Werden die Fliehgewichte 87 durch Anlaufen der Arbeitsspindel 1 nach außen geschleudert, so drücken sie sich längs der kegelförmigen Anlagefläche 90 von dieser axial weg gegen das Federpaket 86, während gleichzeitig der kegelförmige Zangenkopf an der Innenfläche 80 eingezogen und dabei um den Schaft des Werkzeuges 51 verspannt wird. Je schneller die Spindel läuft, umso fester wird die Einspannung.

Zum Werkzeugwechsel wird dabei eine Ladevorrichtung verwendet, die das verschlissene Werkzeug erfaßt und festhält, während es durch weitere Rückbewegung der Arbeitsspindel aus der Spannzange herausgezogen und dann durch ein neues ersetzt wird.

Die Steigung entlang der kegelförmigen Anlagefläche 90 sollte wenigstens für Bohrer unter 5 mm Durchmesser nicht mehr als 0,3 mm betragen. Daraus resultiert eine Einbaugenauigkeit zwischen der Anlagefläche 90 und der Spannzange mit deren Anschlagfläche von etwa 0,1 mm.

Abweichend von der dargestellten Ausführung kann auch der Fliehkraftmechanismus 85 vom Spannteil der Zange getrennt und an dieser durch eine Gewindeverbindung befestigt werden, was einen beschleunigten Werkzeugwechsel ermöglicht.

Die in Fig.14 gezeigte Lagerbuchse ist im wesentlichen zylindrisch ausgebildet mit an den Enden vorgesehenen Flanschansätzen 102, zwischen welchen eine Ringnut 103 gebildet ist. Diese nach außen abgedichtete Ringnut wird im Betrieb an eine Druckgaszuführung angeschlossen.

Die gezeigte Lagerbuchse ist durch vier stirnseitig und zentrisch zur Achse 110 zusammengefügte Ringkörper gebildet, zwei äußere Flanschringe 104, einen Mittelring 105 und zwei zwischengefügte Düsenringe 106, die jeweils an den senkrecht zur Achse 110 liegenden Planflächen 107 miteinander verbunden sind. Sofern einer der anzuschließenden Ringe metallisch ausgebildet ist, muß eine Schmelzverbindung, etwa eine Lötverbindung, eingesetzt werden. Bestehen auch die in der Zeichnung schraffiert dargestellten Ringe 104,105 aus Sintermaterial, dann können alle Ringe 104 bis 106 zusammengesintert werden.

Wenigstens die Düsenringe 106 werden zweckmäßigerweise vorgefertigt. Anstatt alle Ringteile nach der Fertigung seitlich aneinanderzufügen, genügt bei einer vollständig aus Sinterwerkstoff bestehenden Lagerbuchse die Vorfertigung der Düsenringe 106, eventuell mit fertigbearbeiteten Planflächen 107. Solche Ringe können dann beispielsweise nach Fig.13 in eine Sinterform eingesetzt werden, die außen und innen jeweils ein Übermaß 211,212 vorsieht, das anschließend weggeschliffen wird.

Wenigstens die Düsenringe 106 bestehen hier aus Sintermaterial, vorzugsweise mit Korngut aus Wolframcarbid. Im Falle, daß die Ringe 104,105 aus Metall oder anderem nicht porösem Werkstoff bestehen, wird man das Korngut für die Düsenringe 106 verhältnismäßig grob wählen, um Strömungskanäle mit recht weitem Querschnitt aus der Ringnut 103 heraus zur Innenfläche 113 der Lagerbuchse zu schaffen.

Bestehen die Teile 104,105 aus gasundurchlässigem Werkstoff, werden zweckmäßigerweise die Düsenringe 106 aus einem Gemisch von Grobkorn 114 und Feinkorn 115 gebildet.

Diese unregelmäßige Kornverteilung ist in der Vergrößerung Fig.16 deutlich gemacht. Die dort in der zweidimensionalen Darstellung erkennbaren Zwischenräume 118 zwischen den einzelnen Körnern 114,115 haben in der dreidimensionalen Anordnung recht vielfältige Verbindungen, die als Strömungswege zum Zuführen des Trägermediums zur Innenfläche 113 dienen.

An einer Stelle der unregelmäßigen Anordnung kann jedoch eine bestimmte Verteilung zwischen Grobkorn 114 und Feinkorn 115 vorgegeben werden. Dies nicht nur zwischen benachbarten Ringkörpern 104,105,106, bei welchen sich schwache und starke Durchlässigkeit abwechseln, sondern auch im Gemisch selbst, etwa dergestalt, wie dies durch die mittleren Grobkörner 114 in Fig.16 angedeutet ist, wo grobe Körner 114 längs eines bestimmten Weges konzentriert vorgesehen und daher auch dort erweiterte Strömungswege 22 einbaut sind.

Besser vorgegeben ist dies bei der Ausführung nach den Fig.17 und 18, wo in zwei dem Ort der Düsenringe 106 entsprechenden Radialebenen eines einstückigen Buchsenkörpers 101 sternförmig verteilte zylindrische Durchbrechungen 116 vorgesehen sind, in welche Düsenstopfen 117 aus Sintermaterial eingesetzt und mit dem Buchenskörper zusammengesintert oder verlötet sind. Das letztere, die Schmelzverbindung, gilt vornehmlich für einen metallischen Buchsenkörper oder Trägerteil, während das Zusammensintern nach Einsetzen der Düsenstopfen 117 in eine Sinterform durchgeführt werden kann.

Die Figuren 19 und 20 zeigen eine Abwandlung 161 der Düsenringe 106 aus Fig.14. Dabei sind in die Innenfläche 113 vier Segmentnuten 120 eingeformt, die zwischen sich flache Segmentrücken 121 bilden. Die gleiche Konfiguration kann auch über den restlichen Teil der Buchse 101 durchgeführt werden. Die Segmentnuten 120 lassen sich dabei ebenso für die Zuführung des Trägermediums als auch für dessen Ableitung einsetzen. Vor allem dienen sie der Vergleichsmäßigung der zwischen Welle und Lagerbuchse wirkenden Abstützung.

## Ansprüche

1. Hochfrequenzspindel zur Werkstückbearbeitung, mit einer mittels wenigstens eines Luftlagers (26 bis 28) in einem Spindelgehäuse(3) drehbar gelagerten, radial und axial abgestützten Arbeitsspindel(1), **dadurch gekennzeichnet, daß** der Arbeitsspindel(1) ein gesonderter Stellantrieb (39) zur Längsverstellung gegenüber dem Spindelgehäuse(3) zugeordnet ist.

2. Spindel nach Anspruch 1, **dadurch gekennzeichnet, daß** der Stellantrieb(39) zu seinem einen Ende hin in einem Radiallager(44,441) und zum entgegengesetzten Ende Hin im Stellgewinde einer Stellspindel(45) gelagert ist.

3. Spindel nach Anspruch 2, **dadurch gekennzeichnet, daß** die zweite Lagerung des Stellgetriebes(39) durch ein Spindelgetriebe(45,46) mit einer Gewindemutter gebildet ist, die sich auf der Stellspindel(45) abstützt.

4. Spindel nach Anspruch 3, **dadurch gekennzeichnet, daß** das Stellgetriebe(39) mit einer Kugelumlaufmutter(46) versehen ist.

5. Spindel nach Anspruch 2, 3 oder 4, **dadurch gekennzeichnet, daß** das Radiallager durch ein Rollenlager gebildet ist.

6. Spindel nach einem der Ansprüche 1 bis 5, **dadurch gekennzeichnet, daß** die Welle des Stellgetriebes(39) durch die Welle des Stellspindel-Motors(42) gebildet ist.

7. Spindel nach einem der Ansprüche 1 bis 6, mit einem Axial-Luftlager(28), **dadurch gekennzeichnet,** daß die Druckluftzuführung zum Axiallager(28) in der Stellspindel(45,31) verlegt ist.

8. Spindel nach einem der vorhergehenden Ansprüche, **dadurch gekennzeichnet,** daß das gasförmige Trägermedium wenigstens eines Lagers(26 bis 28) durch eine Gleitring-Dichtungsanordnung zugeführt ist.

9. Spindel nach einem der vorhergehenden Ansprüche, **dadurch gekennzeichnet,** daß der Sekundärteil(41) wenigstens eines Antriebsmotors in die Oberfläche der Arbeitsspindel(2) so integriert ist, daß diese eine durchgehend glattflächige Begrenzungsfläche erhält.

10. Spindel nach einem der vorhergehenden Ansprüche, **dadurch gekennzeichnet,** daß am Gehäuse(3) bzw. am Stator(2) eine in der Spindelachse(23) gegen eine Spannzange(52) vorragende Auswerferstange(54) befestigt ist, die zum Öffnen der Spannzange durch Einfahren der Arbeitsspindel(1) in eine Rückzugsstellung dient.

11. Spindel nach einem der vorhergehenden Ansprüche, **dadurch gekennzeichnet,** daß ein Puffer(12) vorgesehen ist, der die Bewegungsbahn der Arbeitsspindel(1) im Gehäuse(3) begrenzt.

12. Spindel nach einem der Ansprüche 1 bis 9, **dadurch gekennzeichnet,** daß die Spannzange-(52) mit einem Fliehkraftmechanismus(85) zu ihrem Steuern versehen ist.

13. Spindel nach Anspruch 12, **dadurch gekennzeichnet,** daß Fliehgewichte(87) vorgesehen sind, die radial und axial einstellbar und zwischen einer Federeinrichtung(86) und wenigstens einer Schrägfläche(90) geführt sind und zum axialen und radialen Verspannen des Werkzeuges(51) in der Spannzange(52) dienen.

14. Spindel nach Anspruch 13, mit einer zu ihrem hinteren Ende in einzelne Federungen(89) längsgeschlitzten hülsenförmigen Spannzange (52), **dadurch gekennzeichnet,** daß die Fliehgewichte(87) fest an den Enden der Federzungen(89) angebracht sind.

15. Spindel nach einem der Ansprüche 12 bis 14, **dadurch gekennzeichnet,** daß der Fliehkraftmechanismus(85) innerhalb eines Hohlraumes(77) der Arbeitsspindel(1) angebracht ist, in dem ein Stützring(88) mit kegelartigen Anlageflächen(90) zur axialen Abstützung der Fliehgewichte(87) angebracht ist, die sich mit torusartig gerundeten Stirnflächen(91) an Tellerfedern-(86) abstützen.

16. Spindel nach einem der Ansprüche 12 bis 15, **dadurch gekennzeichnet,** daß der Fliehkraftmechanismus(55) zur Betätigung der Spannzange(52) von deren Greifteil abgetrennt und mit diesem lösbar verbunden ist.

17. Spindel zur Werkstückbearbeitung mit einer in einem Spindelgehäuse(3) mittels wenigstens eines Luftlagers radial und axial abgestützten Arbeitsspindel(1) nach einem der vorhergehenden Ansprüche, **dadurch gekennzeichnet,** daß ein Axialschubmotor(63) etwa in Längsmitte des Spindelgehäuses(3) ebenso wie der Drehmotor(25) zwischen seitlichen Radiallagern(26,27,22) angeordnet ist.

18. Spindel nach einem der vorhergehenden Ansprüche, **dadurch gekennzeichnet,** daß eine berührungslos arbeitende Meßeinrichtung(64) vorgesehen ist, welche zum ständigen Bestimmen des augenblicklichen Ortes der Arbeitsspindel(1) längs der Spindelachse(23) dient.

19. Spindel nach Anspruch 18, **dadurch gekennzeichnet,** daß im Spindelgehäuse(3) zu den beiden Enden eines Meßraumes(67) hin zwei Sensorspitzen(65) in der Axialbahn eines Teiles(60) der Arbeitsspindel(1) angebracht und an eine Meßeinrichtung(64) sowie eine Steuereinrichtung zur Steuerung der Längsverstellung der Arbeitsspindel(1) angeschlossen sind.

20. Spindel nach Anspruch 18 oder 19, **dadurch gekennzeichnet,** daß die Meßeinrichtung-(64) einen Optokoppler aufweist und die Sensorspitzen(65) mit je einem Sender - wie z.B. eine Leuchtdiode - und einem Empfänger - wie z.B. eine Empfangsdiode - versehen sind.

21. Spindel nach Anspruch 19 oder 20, **dadurch gekennzeichnet,** daß ein zur Messung und Steuerung von Drehgeschwindigkeit und/oder Längsvorschub der Arbeitsspindel(1) dienender Taststrahl des Optokopplers längs der Spindelachse(23) durch wenigstens eine exzentrisch zu dieser angebrachte Durchbrechung(71) in einem Flansch(60) der Arbeitsspindel(1) hindurchgerichtet ist.

22. Spindel nach einem der vorhergehenden Ansprüche, **dadurch gekennzeichnet,** daß im Einleitweg des Trägermediums ein auswechselbarer Luftfilter(20) angeordnet ist.

23. Spindel nach Anspruch 22, **dadurch gekennzeichnet,** daß dem Filter(20) ein Differenzdruckmesser mit je einem in der Strömungsbahn des Trägermediums vor und hinter dem Filter angebrachten Drucksensor zugeordnet ist.

24. Spindel nach einem der vorhergehenden Ansprüche, **dadurch gekennzeichnet,** daß als Luftlager eine Lagerbuchse vorgesehen ist, mit mindestens einem Buchsenteil, das Sinterwerkstoffe(114,115) unterschiedlicher Korngröße und/oder Kornstruktur aufweist.

25. Spindel nach Anspruch 24, **dadurch gekennzeichnet,** daß die in wenigstens einem Buchsenteil vorgesehenen Sinterwerkstoffe(114,115) unterschiedlicher Korngröße und/oder Kornstruktur in unregelmäßiger Verteilung bzw. Mischung vorgesehen sind.

26. Spindel nach Anspruch 24 oder 25, **dadurch gekennzeichnet,** daß grobkörniges Sintermaterial(114) in feinkörnigem Sintermaterial-(115) derart eingelagert ist, daß es durch die Buchsenwandung hindurch zusammenhängend verlaufende Strömungswege(122) größeren Querschnitts für das Trägermedium des Spindellagers bildet.

27. Spindel nach Anspruch 26, **dadurch gekennzeichnet,** daß die durch grobkörniges Sintermaterial(114) gebildeten Strömungswege-(122) entsprechend einem vorgegebenen Muster über die Buchsenwandung verteilt angebracht sind.

28. Spindel nach Anspruch 26 oder 27, **dadurch gekennzeichnet,** daß die Strömungswege-(122) in Umfangsrichtung und/oder axialer Richtung unter etwa gleichen Zwischenabständen angeordnet sind.

29. Spindel nach Anspruch 27 oder 28, **dadurch gekennzeichnet,** daß das die Strömungswege(122) bildende grobkörnige Sintermaterial(114) in unter axialen Zwischenabständen vorgesehenen Bereichen stärker konzentriert ist als in den anderen Bereichen des Buchsenkörpers.

30. Spindel nach einem der Ansprüche 24 bis 29, **dadurch gekennzeichnet,** daß die Lagerbuchse eine Mehrzahl axial aneinander anschließende Ringbereiche(104,105,106) aufweist, die unterschiedliche Anteile von grobkörnigem und feinkörnigem Sintermaterial beinhalten.

31. Spindel nach Anspruch 7, **dadurch gekennzeichnet,** daß Ringbereiche(116) aus vorwiegend grobkörnigem Sintermaterial mit solchen aus weniger grobkörnigem Werkstoff(104,105) abwechseln.

32. Spindel nach Anspruch 31, **dadurch gekennzeichnet,** daß die Ringbereiche aus vorwiegend grobkörnigem Werkstoff jeweils wenigstens einen vorgefertigten Sinterkörper(117) enthalten, der mit anderen Teilen der Lagerbuchse einstückig zusammengesintert ist.

33. Spindel nach Anspruch 32, **dadurch gekennzeichnet,** daß die Lagerbuchse in wenigstens einer Querebene unter gleicher Winkelteilung sternförmig angeordnete und speichenartig eingesinterte Düsenkörper(117) aus grobkörnigem Sintermaterial aufweisen.

34. Spindel nach Anspruch 32 oder 33, **dadurch gekennzeichnet,** daß wenigstens ein Querschnittsbereich der Lagerbuchse durch eine zwischen seitlichen Buchsenteilen anderen Werkstoffes eingesinterte Scheibe(106) aus überwiegend grobkörnigem Sinterwerkstoff gebildet ist.

35. Spindel nach einem der Ansprüche 32, 33 oder 34, **dadurch gekennzeichnet,** daß wenigstens die eingelagerten oder zwischengefügten grobkörnigen Sinterscheiben(161) auf ihrer Innenseite(113) mit in Umfangsrichtung gleichmäßig verteilten, im Querschnitt sektorförmigen Ausnehmungen(120) versehen sind.

36. Spindel nach einem der vorhergehenden Ansprüche, **dadurch gekennzeichnet,** daß die Lagerbuchse vorwiegend Kornmaterial großer Temperaturbeständigkeit wie z.B. Wolframcarbid aufweist.

37. Spindel nach einem der vorhergehenden Ansprüche, **dadurch gekennzeichnet,** daß die Lagerbuchse einen Tragkörper(101) aus hochfestem und wärmebeständigem Werkstoff wie Metall aufweist, an dem ein oder mehrere Sinterkörper durch Verschmelzen bzw. Anlöten befestigt sind.

Fig 1

EP 0 362 781 A2

Fig 2

EP 0 362 781 A2

Fig. 3

Fig.4

Fig 5

Fig 6

Fig 7

Fig 12

Fig 8

Fig 9

Fig 10

Fig 10a

EP 0 362 781 A2

Fig 11a          Fig 11b          Fig 11c

EP 0 362 781 A2

Fig.13

Fig.14

Fig. 15

Fig. 16

Fig. 17

Fig. 18

Fig. 19

Fig. 20